# EUROPÄISCHE PATENTANMELDUNG

(11) **EP 3 067 226 A2**
(43) Veröffentlichungstag der Anmeldung: **14.09.2016**
(21) Anmeldenummer: 16157927.1
(22) Anmeldetag: 29.02.2016
(51) Int. Cl.: B60H 1/00

(54) **KLAPPENANORDNUNG**

(30) Priorität: 12.03.2015 DE 102015204511
(71) Anmelder: Mahle International GmbH, 70376 Stuttgart (DE)
(72) Erfinder: SCHAAKE, Norman, 71706 Markgröningen (DE)
(74) Vertreter: BRP Renaud & Partner mbB Rechtsanwälte Patentanwälte Steuerberater

(57) **Zusammenfassung**

Die Erfindung betrifft eine Klappenanordnung (1), insbesondere für eine Fahrzeug-Klimaanlage (2), mit einem Gehäuse (3) und einer im Gehäuse (3) angeordneten Klappe (5) zur Regelung eines Luftstroms im Gehäuse (3), wobei die Klappe (5) einen Klappengrundkörper (6) mit einer in einem Betriebszustand luftanströmseitig angeordneten Vorderseite (7) aufweist.

Erfindungswesentlich ist dabei,
- dass am Klappengrundkörper (6) eine elastische Dichtlippe (8) mit einer Dichtfläche (9) vorgesehen ist,
- dass im Bereich der Dichtlippe (8) und außerhalb der Dichtfläche (9) eine im Wesentlichen vertikal von der Vorderseite (7) des Klappengrundkörpers (6) abstehende Rippe (10) zur Luftmengenreduktion beim Öffnen der Klappe (5) angeordnet ist, wobei die Dichtlippe (8) und die Rippe (10) einstückig ausgebildet sind.

## Beschreibung

Die vorliegende Erfindung betrifft eine Klappenanordnung, insbesondere für eine Fahrzeug-Klimaanlage, gemäß dem Oberbegriff des Anspruchs 1. Die Erfindung betrifft außerdem eine Klimaanlage mit zumindest einer solchen Klappenanordnung.

Aus der DE 10 2007 036 824 A1 ist eine gattungsgemäße Klappenanordnung mit einem Gehäuse und einer im Gehäuse angeordneten Klappe zur Regelung eines Luftstroms im Gehäuse bekannt, wobei die Klappe einen Klappengrundkörper aufweist, der eine zumindest in einem Betriebszustand luftanströmseitig angeordnete Vorderseite und eine strömungsabgewandt angeordnete Rückseite hat. Auf der Rückseite des Klappengrundkörpers ist dabei ein Luftleitelement angeordnet, welches sich in einem Winkel schräg bezüglich der Rückseite des Klappengrundkörpers erstreckt. Hierdurch soll insbesondere ein unangenehmes Pfeifgeräusch beim Öffnen und Schließen der Klappe zumindest minimiert werden können.

Aus der EP 1 783 409 A1 ist eine weitere Klappenanordnung mit einer Klappe bekannt.

Bei der Verwendung von einschenklig gelagerten Klappen, insbesondere in Klimaanlagen bei Kraftfahrzeugen, tritt beim Öffnen dieser Klappen zunächst ein schmaler Spalt auf, durch den eine hohe Luftmenge quasi trichterförmig gelenkt wird. Liegt dicht hinter diesem Spalt und quer zur Anströmrichtung ein geradliniges Hindernis, beispielsweise eine Nut eines aufgesteckten Kanals oder eine Kante, kann ein unangenehmes Pfeifgeräusch entstehen. Da derartige Hindernisse zum Teil jedoch unvermeidbar sind, muss der Luftaustritt aus dem Spalt behindert werden. Diese partielle Behinderung darf jedoch bei voll geöffneter Klappe wiederum keine akustischen oder luftmengentechnischen Nachteile ergeben.

Nachteilig bei den aus dem Stand der Technik bekannten Klappenanordnungen ist jedoch, dass deren Fähigkeit zur Reduzierung der Pfeifgeräusche nur unzureichend ist, da sich diese zu weit weg vom eigentlichen Luftspalt beim Öffnen der Klappe befinden.

Die vorliegende Erfindung beschäftigt sich daher mit dem Problem, für eine Klappenanordnung der gattungsgemäßen Art eine verbesserte oder zumindest eine alternative Ausführungsform anzugeben, welche einerseits das Entstehen eines Pfeifgeräusches weiter minimiert, andererseits aber weder akustisch noch luftmengentechnisch störend bei vollständig geöffneter Klappe wirkt.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, an einem Klappengrundkörper im Bereich einer elastischen Dichtlippe eine im Wesentlichen senkrecht von einer Vorderseite des Klappengrundkörpers abstehende, welche es bereits bei lediglich geringfügig geöffneter Klappe verhindert, dass durch den dann entstehenden Spalt aufgrund einer Luftströmung ein unangenehmes Pfeifgeräusch entsteht. Die erfindungsgemäße Klappenanordnung, welche beispielsweise in einer Fahrzeug-Klimaanlage angeordnet sein kann, weist ein Gehäuse sowie eine in diesem Gehäuse angeordnete Klappe zur Regelung eines Luftstroms im Gehäuse auf. Diese Klappe besitzt besagten Klappengrundkörper mit einer in einem Betriebszustand luftanströmseitig angeordneten Vorderseite. Am Klappengrundkörper selbst ist nun eine elastische Dichtlippe mit einer Dichtfläche vorgesehen, wobei diese Dichtlippe mit ihrer Dichtfläche bei geschlossener Klappe auf einem Klappenanschlag aufliegt und dadurch abdichtet. Im Bereich der Dichtlippe, jedoch außerhalb der Dichtfläche, ist erfindungsgemäß nun die im Wesentlichen vertikal von der Vorderseite des Klappengrundkörpers abstehende Rippe zur Luftmengenreduktion beim Öffnen der Klappe angeordnet, wobei die Dichtlippe und die Rippe einstückig ausgebildet sind. Mittels der erfindungsgemäß vorgesehenen, zusätzlich auf der Dichtlippe außerhalb der Dichtfläche angeordneten und durchgehenden Rippe, kann erreicht werden, dass insbesondere bei kleinen Klappenöffnungswinkeln die Durchströmung des dann entstehenden Spalts zwischen Dichtlippe und Klappenanschlag am Gehäuse stark eingeschränkt und dadurch das unerwünschte Pfeifgeräusch stark reduziert wird. Dabei ist die Rippe selbst möglichst nahe an der Dichtfläche der Klappe positioniert, um den Spalt beim Öffnen der Klappe nahe vollständig verschließen zu können. Aus diesem Grund wird die Rippe nicht am Klappengrundkörper, sondern direkt an der Dichtlippe ausgebildet, wodurch es wiederum möglich ist, die Dichtlippe als Ganzes, d.h. mit Dichtfläche und vertikaler Rippe, als einstückiges Kunststoffteil herzustellen. Mit der erfindungsgemäßen Klappenanordnung ist es somit möglich, vergleichsweise einfach aber dennoch hoch effektiv das Entstehen von unerwünschten Pfeifgeräuschen beim Öffnen bzw. Schließen der Klappe zu verhindern.

Bei einer vorteilhaften Weiterbildung der erfindungsgemäßen Klappenanordnung weist ein freier Rand der Rippe einen unregelmäßigen Verlauf, insbesondere eine Sägezahnstruktur, auf. Mittels einer derartigen Sägezahnstruktur kann das Entstehen der unerwünschten Pfeifgeräusche am Spalt, d.h. zwischen der Rippe und dem Klappenanschlag, zuverlässig verhindert werden. Die Sägezahnstruktur bewirkt dabei die Erzeugung von geringen Turbulenzen, welche einen gezielten und den Pfeifton erzeugenden Luftstrom verhindern.

Bei einer weiteren vorteilhaften Ausführungsform der erfindungsgemäßen Lösung beträgt eine vertikale Höhe der Rippe zumindest 3mm. In diesem Zusammenhang hat es sich als besonders vorteilhaft erwiesen, wenn der freie Rand der Dichtfläche bzw. der Dichtrippe eine größere vertikale Höhe zum Klappengrundkörper aufweist als der freie Rand der Rippe, da hierdurch bei vollständig geöffneter Klappe ein durch die Klappenanordnung strömender Luftstrom nicht behindert wird. Beispielsweise kann die vertikale Höhe des freien Randes zum Klappengrundkörper 6mm betragen, während - wie eingangs erwähnt - die vertikale Höhe der Rippe 3mm beträgt. 3mm sollten jedoch auf alle Fälle gewählt werden, um einen nennenswerten Einfluss und damit eine signifikante Reduzierung der unerwünschten Pfeifgeräusche erreichen zu können.

Bei einer weiteren vorteilhaften Ausführungsform der erfindungsgemäßen Lösung ist die Klappe samt Dichtlippe und Rippe im 2-Komponentenspritzgussverfahren hergestellt. Hierdurch ist es möglich, die Dichtlippe samt der Rippe beispielsweise als Weichkomponente auszugestalten und dann im Spritzgussverfahren mit einem hierzu härteren Klappengrundkörper stoffschlüssig zu verbinden. Mit einem derartigen 2-Komponentenspritzgussverfahren kann die gesamte Klappe der Klappenanordnung nicht nur qualitativ hochwertig, sondern zudem auch kostengünstig hergestellt werden.

Bei einer weiteren vorteilhaften Ausführungsform der erfindungsgemäßen Lösung verläuft die Dichtfläche schräg zum Klappengrundkörper hin zu dessen Vorderseite. Die Dichtlippe besitzt somit eine zur Ebene des Klappengrundkörpers geneigte Dichtfläche, beispielsweise eine um 30 bis 40°, insbesondere um ca. 35°, zum Klappengrundkörper geneigte Dichtfläche, wobei die Rippe selbst im Wesentlichen vertikal zum Klappengrundkörper und damit ca. 50 bis 60° zur Dichtfläche der Dichtlippe absteht. Mittels einer derartig geneigten Dichtfläche kann ein besonders dichtes und damit zuverlässiges Verschließen des Klappenventils, d.h. der Klappe auf dem Klappenanschlag erreicht werden, was für eine einwandfreie Funktion von großem Vorteil ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Schnittdarstellung durch eine erfindungsgemäße Klappenanordnung,
- Fig. 2: eine Detaildarstellung im Bereich einer Dichtlippe aus Fig. 1,
- Fig. 3: eine Ansicht auf eine Vorderseite einer Klappe der erfindungsgemäßen Klappenanordnung.

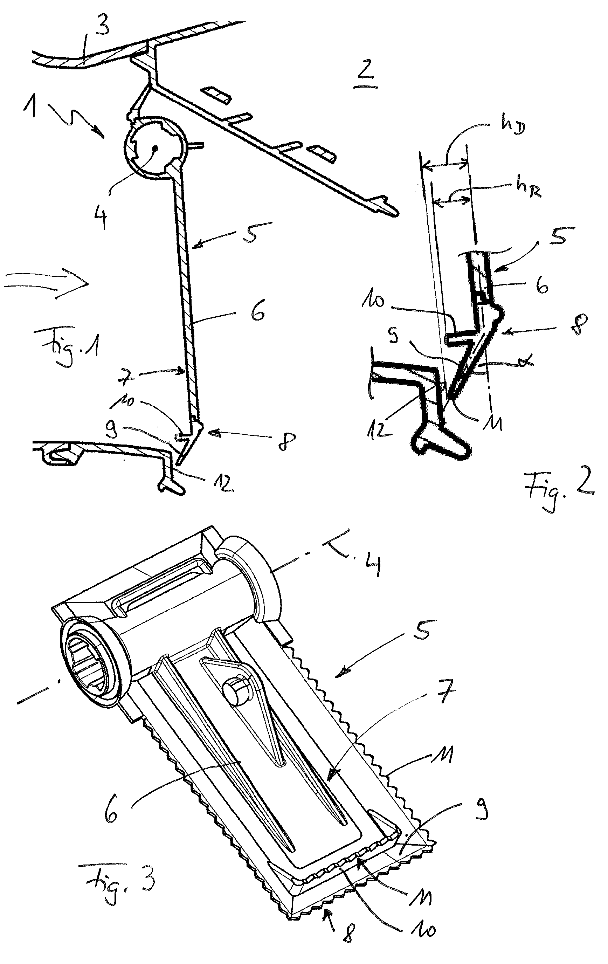

Entsprechend der Fig. 1, weist eine erfindungsgemäße Klappenanordnung 1, insbesondere für eine Fahrzeug-Klimaanlage 2, ein Gehäuse 3 sowie eine darin schwenkbar um eine Achse 4 gelagerte Klappe 5 auf. Die Klappe 5 dient dabei der Regelung eines Luftstroms im Gehäuse 3 und weist einen Klappengrundkörper 6 mit einer im Betriebszustand luftanströmseitig angeordneten Vorderseite 7 auf. Erfindungsgemäß ist nun am Klappengrundkörper 6 eine elastische Dichtlippe 8 mit einer Dichtfläche 9 vorgesehen, wobei im Bereich der Dichtlippe 8 und außerhalb der Dichtfläche 9 eine im Wesentlichen vertikal von der Vorderseite 7 des Klappengrundkörpers 6 abstehende Rippe 10 zur Luftmengenreduktion beim

Öffnen der Klappe 5 angeordnet ist und wobei die Dichtlippe 8 und die Rippe 10 einstückig ausgebildet sind.

Betrachtet man die Klappe 5 in einer Detaildarstellung gemäß der Fig. 3, so kann man erkennen, dass ein freier Rand der Rippe 10 einen unregelmäßigen Verlauf, hier eine Sägezahnstruktur 11, aufweist. Mittels dieser sägezahnartigen Struktur 11 oder insgesamt einem unregelmäßigen Verlauf kann insbesondere ein unerwünschtes Pfeifgeräusch bei einem lediglich geringen Öffnungswinkel der Klappe 5 erreicht werden. Eine derartige Sägezahnstruktur 11 kann auch an einem freien Rand der Dichtfläche 9 angeordnet sein, wie dies ebenfalls der Fig. 3 zu entnehmen ist.

Betrachtet man die Detaildarstellung in Fig. 2, so kann man erkennen, dass die Dichtfläche 9 schräg zum Klappengrundkörper 6, d.h. zu einer Ebene der Klappe 5, hin zu dessen Vorderseite 7 verläuft. Die Dichtfläche kann dabei um einen Winkel α von ca. 30° bis 40°, insbesondere um α ungefähr 35°, zur Ebene des Klappengrundkörpers 6 geneigt sein. Durch den geneigten Verlauf der Dichtfläche 9 kann ein zuverlässiges und dichtes Aufliegen auf dem Klappenanschlag 12 erreicht werden.

Betrachtet man die Dichtlippe 8 bzw. die Rippe 10 weiter, so kann man gemäß der Fig. 3 erkennen, dass diese beide einen U-förmigen Verlauf aufweisen, wobei die Rippe 10 lediglich kurze U-Schenkel im Vergleich zur Dichtlippe 8 besitzt.

Um bei einer vollständig geöffneten Klappe 5 eine Durchströmung nicht durch das Vorsehen der Rippe 10 zu behindern, weist der freie Rand der Dichtfläche 9/Dichtlippe 8 eine größere vertikale Höhe h_{D} zum Klappengrundkörper 6 auf (vgl. Fig. 2), als der freie Rand der Rippe 10. Die vertikale Höhe h_{R} des freien Randes der Rippe 10 ist somit kleiner als die vertikale Höhe h_{D} der Dichtlippe 8. Die minimale Höhe h_{R} der Rippe 10 sollte dabei ca. 3mm betragen, um überhaupt einen Einfluss auf die Reduzierung der Pfeifgeräusche bewirken zu können. Rein theoretisch ist aber auch denkbar, dass die Rippe 10 beispielsweise 6mm hoch ist, wobei die Höhe h_{D} der Dichtlippe 11 vorzugsweise stets zumindest geringfügig größer ist, damit die Rippe 10 keine strömungstechnische Störung bei vollständig geöffneter Klappe 5 bewirkt. "Vertikal" bezieht sich hierbei auf die Ebene des Klappengrundkörpers 6.

Um die Klappe 5 und damit auch die Klappenanordnung 1 einerseits qualitativ hochwertig und andererseits kostengünstig herstellen zu können, kann vorgesehen sein, die Klappe 5 samt Dichtlippe 8 und Rippe 10 als einstückiges Kunststoffspritzgussteil herzustellen, wobei es selbstverständlich alternativ auch vorstellbar ist, die Klappe 5 samt Dichtlippe 8 und Rippe 10 im 2-Komponentenspritzgussverfahren herzustellen, so dass für die Dichtlippe 8 und die Rippe 10 ein anderer, insbesondere ein weicherer, Werkstoff verwendet werden kann, als für den Klappengrundkörper 6.

Mit der erfindungsgemäßen Klappenanordnung 1 und insbesondere der erfindungsgemäß gestalteten Klappe 5 kann ein bei lediglich geringfügig geöffneter Klappe 5 entstehendes Pfeifgeräusch deutlich reduziert, vorzugsweise sogar verhindert werden, ohne dass durch die hierfür vorgesehene Rippe 10 akustische oder luftmengentechnische Störungen bei vollständig geöffneter Klappe 5 einhergehen würden. Durch die Integration der Dichtlippe 8 an den Klappengrundkörper 6 der Klappe 5 und damit die einstückige Herstellung der gesamten Klappe 5 kann insbesondere auch ein bisher erforderlicher separater Montageschritt zum Anordnen bzw. Montieren der Dichtlippe 10 entfallen, die sich ebenfalls vorteilhaft auf die Herstellungskosten auswirkt.

## Patentansprüche

1. Klappenanordnung (1), insbesondere für eine Fahrzeug-Klimaanlage (2), mit einem Gehäuse (3) und einer im Gehäuse (3) angeordneten Klappe (5) zur Regelung eines Luftstroms im Gehäuse (3), wobei die Klappe (5) einen Klappengrundkörper (6) mit einer in einem Betriebszustand luftanströmseitig angeordneten Vorderseite (7) aufweist,
**dadurch gekennzeichnet,**
- **dass** am Klappengrundkörper (6) eine elastische Dichtlippe (8) mit einer Dichtfläche (9) vorgesehen ist,
- **dass** im Bereich der Dichtlippe (8) und außerhalb der Dichtfläche (9) eine im Wesentlichen vertikal von der Vorderseite (7) des Klappengrundkörpers (6) abstehende Rippe (10) zur Luftmengenreduktion beim Öffnen der Klappe (5) angeordnet ist, wobei die Dichtlippe (8) und die Rippe (10) einstückig ausgebildet sind.

2. Klappenanordnung nach Anspruch 1,
**dadurch gekennzeichnet, dass**
ein freier Rand der Rippe (10) einen unregelmäßigen Verlauf, insbesondere eine Sägezahnstruktur (11), aufweist.

3. Klappenanordnung nach Anspruch 1 oder 2,
**dadurch gekennzeichnet, dass**
eine vertikale Höhe h_{R} der Rippe (10) zumindest 3mm beträgt.

4. Klappenanordnung nach einem der Ansprüche 1 bis 3,
**dadurch gekennzeichnet, dass**
die Dichtfläche (9) schräg zum Klappengrundkörper (6) hin zu dessen Vorderseite (7) verläuft.

5. Klappenanordnung nach einem der vorhergehenden Ansprüche,
**dadurch gekennzeichnet, dass**
die Dichtfläche (9) um 30° < α < bis 40°, insbesondere um α ca. 35°, zum Klappengrundkörper (6) geneigt ist.

6. Klappenanordnung nach einem der Ansprüche 1 bis 5,
**dadurch gekennzeichnet, dass**
ein freier Rand der Dichtfläche (9) einen unregelmäßigen Verlauf, insbesondere eine Sägezahnstruktur (11), aufweist.

7. Klappenanordnung nach einem der vorhergehenden Ansprüche,
**dadurch gekennzeichnet, dass**
die Dichtlippe (8) und/oder die Rippe (10) einen U-förmigen Verlauf aufweisen.

8. Klappenanordnung nach einem der vorhergehenden Ansprüche,
**dadurch gekennzeichnet, dass**
die Klappe (5) samt Dichtlippe (8) und Rippe (10) im 2-Komponentenspritzgussverfahren hergestellt ist.

9. Klappenanordnung nach einem der vorhergehenden Ansprüche,
**dadurch gekennzeichnet, dass**
der freie Rand der Dichtlippe/Dichtfläche (8,9) eine größere vertikale Höhe (h_{D}) zum Klappengrundkörper (6) aufweist als der freie Rand der Rippe (10), wodurch die Rippe (10) einen Luftstrom bei vollständig geöffneter Klappe (5) nicht behindert.

10. Fahrzeug-Klimaanlage (2) mit einem Wärmeübertrager und zumindest einer Klappenanordnung (1) nach einem der Ansprüche 1 bis 9.
